# EUROPEAN PATENT APPLICATION

(11) **EP 0 625 667 A2**
(43) Date of publication of application: **23.11.1994**
(21) Application number: 94106237.4
(22) Date of filing: 21.04.1994
(51) Int. Cl.: F16L 23/14, F24F 13/02

(54) **Flange connection for ducts**

(30) Priority: 12.05.1993 JP 135420/93; 17.05.1993 JP 139435/93
(71) Applicant: MIEDUCT KOGYO KABUSHIKI KAISHA, Tsu-shi, Mie-ken (JP)
(72) Inventor: Nishiguchi, Shigeru, Tsu-shi, Mie-ken (JP)
(74) Representative: Weisert, Annekäte, Dipl.-Ing. Dr.-Ing.

(57) **Abstract**

The present invention provides a flange which serves as a joint and which is adapted to be stably and firmly attached to the open end of a duct for air- conditioning or smoke discharge simply by inserting it in the open end of the duct. To this end, a plurality of wedge pawls are formed by inward or outward lancing-up in the vicinity of the open end of the duct, while the lip-like attaching base which is one side of the flange formed of a single metal plate bent in substantially L-shape is turned back and laminated to form inner and outer base lips having cushion spaces defined therein, said cushion spaces being filled with a sealant for sealing the duct, the arrangement being such that when the attaching base is inserted in the open end of the duct with an insertion port defined between the two base lips, a holding hook turned back from one of the base lips inseparably engages the wedge pawls and the duct is maintained air-tight by the sealant.

## Description

### BACKGROUND OF THE INVENTION

Flange connections for ducts used for air-conditioning and smoke discharge in buildings are known in the art. For example, such flange connections are disclosed in Japanese Patent Publication Nos. 8716/1980 and 50237/1980; U.S. Patent Nos. 4,940,264, 3,923,326, and 3,712,650; U.K. Patent 1,275,526; German Patent No. 2,034,005 and 1,946,547.

These known inventions are basically the same and U.S. Patent No. 3,923,326 will be taken up for discussion, wherein, as can be seen in Figs. 1 and 10, the flanges (frame members ) 24 and 26 serving as piping joints for the duct 12 are of double construction, each formed by folding a single metal plate in two. Each flange is L-shaped in cross section, having attaching bases 28 and 37 of given length extending longitudinally of the duct 12, and connection masts 29 and 32 extending upward by a given height radially of the duct 12.

And a corner metal fixture (bent metal fixture) 39 for the duct 12 is undetachably inserted into the hollow space defined by the connection masts 29 and 32, while the attaching bases 28 and 37 are inserted in the open end 23 of the duct 12 to clamp it therebetween, whereupon the attaching bases 28 and 37 and the duct 12 are integrally fixedly by spot welds 38 at given intervals.

With this arrangement, however, after the attaching bases 28 and 37 of the flanges 24 and 26 have been inserted in the duct 12, spot welds 38 have to be made at a number of regularly spaced points, so that the operation is very troublesome, requiring a long time and much labor.

Further, since a spot welding machine has to be used, except the case where the flanges 24 and 26 are to be attached to the duct 12 in a manufacturing plant, if a new separate duct 12 has to be added to branch from an intermediate region of the existing duct 12 or if a damper has to be added to the existing duct 12, the operation of attaching the flanges 24 and 26 to the duct 12 cannot be performed as remodeling work in the job site.

Further, in the above known invention, since the area where each of the flanges 24 and 26 is fixed consists of only two layers, i.e., the outside contact region 37 and the inside contact region 28 of the duct 12, there is a danger of the duct 12 being accidentally deformed during transport to the job site or during handling, a fact which, coupled with the fact that said spot welds 38 are likely to rust, means that the duct 12 still lacks durability. As measures against this, the insertion length of the attaching bases 28 and 37 has to be increased.

On the other hand, as can be seen in U.S. Patent No. 3,199,901 and German Patent No. 1,212,356, it is known to integrally fix the attaching bases 3a and 4a to the ducts 1 and 2 by caulking rivets 9 instead of by said spot welds 38. With this arrangement, however, through-holes for rivets have to be formed, making the operation further troublesome and there is a danger of fatal leakage of air through such through-holes in the ducts 1 and 2, requiring means for making the structure air-tight.

Further, the use of electrically driven drill is inevitable for making said through-holes; however, there is no working space available in the ceiling of the building for using such drill, so that the operation of attaching flanges to the existing duct cannot be performed as repairing work in the job site.

### SUMMARY OF THE INVENTION

The present invention is intended to provide a flange connection for ducts useful to solve said problems.

Accordingly, a first object of the invention is to provide an arrangement comprising a plurality of wedge pawls juxtaposed at intervals in the vicinity of the open end of a duct and formed by outward lancing-up from the drum surface of a duct, an outer base lip forming the lip-like attaching base of a joint flange separate from the duct, the extended front end of said outer base lip being turned back to assume an inwardly reversed state corresponding to said wedge pawls so as to form a hook for holding said wedge pawls, wherein the flange can be undetachably fixedly attached to the duct simply by inserting the attaching base of said flange at its insertion port in the open end of the duct, so that after said inserting operation there is no need to take the trouble of performing separate spot welding or rivet caulking, thereby increasing the operating efficiency.

And such object can also be achieved by employing an arrangement wherein said plurality of wedge pawls are lanced up inwardly, which is opposite to the stated direction, from the drum surface of the duct and the extended front end of the inner base lip forming the attaching base of the flange is turned back to assume the outwardly reversed state corresponding to the wedge pawls so as to form a hook for holding said wedge pawls; such arrangement should be said to be equivalent in achieving the object.

A second object of the present invention is to provide an arrangement wherein in order that the outer and inner base lips forming the lip-like attaching base of said flange respectively cover the outer and inner sides of the drum surface of the duct, said attaching base is laminated by being turned back in corrugated form having a total of at least three continuously meandering layers forming said outer and inner base lips, defining two cushion spaces each between adjacent layers of the two base lips, whereby when the attaching base of said flange is inserted in the open end of the duct, the two base lips elastically hold the drum surface of the duct from the inside and outside; thus, said flange is stably and firmly fixed to the duct without any danger of being deformed, thus increasing its durability.

A third object of the present invention is to provide an arrangement wherein a flange serving as a joint for ducts is formed by continuously bending a single metal plate to define two sealed bag-like cushion spaces each between adjacent layers of the inner and outer base lips forming the lip-like attaching base, i.e., the wedge pawl holding hook formed by inwardly turning back the extended front end of the outer base lip is closed as it is elastically urged against the inner base lip to thereby bag-wise define the cushion space on the outer base lip side, or the wedge pawl holding hook formed by reversely or outwardly turning back the extended front end is closed as it is elastically urged to bag-wise define the cushion space on the inner base lip side, wherein in either case, the sealed cushion space is filled with a sealant for sealing the duct, thereby eliminating the danger of the air leaking through the insertion port of the flange for the lip-like attaching base, thus keeping the duct air-tight.

A fourth object of the invention is to provide an arrangement wherein a plurality of wedge pawls are disposed in a line at intervals in the vicinity of the open end of a duct, said wedge pawls being formed by being lanced up outwardly or inwardly from the drum surface of the duct, so that the lancing-up of such wedge pawls can be automatically continuously performed simply by feeding a duct into an automatic machine in a manufacturing plant, contributing much to mass production and on the other hand, for remodeling work in the job site, said wedge pawls can be lanced up by inserting a manual punching tool into the duct at the cut end edge thereof and manipulating said tool to lance up said wedge pawls.

In that case, since the sealant for sealing the duct is filled in the sealed bag-like cushion space, said sealant prevents accidental air leakage due to excessive lancing-up of the wedge pawls.

In addition, other auxiliary objects will become apparent from the following description of preferred embodiments of the invention.

### BRIEF DESCRIPTION OF THE DRAWINGS

Fig. 1 is a complete diagrammatic front view showing the disassembled state of a duct and joint flanges therefor according to a first embodiment of the present invention;
Fig. 2 is a complete diagrammatic front view showing the assembled state of Fig. 1;
Fig. 3 is a fragmentary enlarged perspective view of Fig. 1;
Fig. 4 is a fragmentary enlarged perspective view of Fig. 2;
Fig. 5 is a front view of Fig. 4;
Fig. 6 is a sectional view taken along the line 6-6 in Fig. 5;
Fig. 7 is a sectional view taken along the line 7-7 in Fig. 5;
Fig. 8 is a perspective view showing a clamp member for the flange;
Fig. 9 is an enlarged perspective view showing the disassembled state of the duct and flange according to the first embodiment of the invention;
Fig. 10 is a side view, in section, of Fig. 9;
Fig. 11 is a side view, in section, showing the inserted state of the flange corresponding to Fig. 10;
Fig. 12 is a perspective view showing a corner connection angle bar for flanges;
Fig. 13 is a perspective view of the corner connection angle bar as seen from behind Fig. 12;
Fig. 14 is a perspective view showing a second embodiment of the present invention corresponding to Fig. 9;
Fig. 15 is a side view, in section, of the flange insertion port of Fig. 14;
Fig. 16 is a side view, in section, showing a third embodiment of the invention corresponding to Fig. 15;
Fig. 17 is a complete schematic front view, showing the disassembled state of a duct and joint flanges therefor according to a fourth embodiment of the invention corresponding to Fig. 1;.
Fig. 18 is a complete schematic front view, showing the assembled state of Fig. 17;
Fig. 19 is a fragmentary enlarged perspective view of Fig. 17;
Fig. 20 is a fragmentary enlarged perspective view of Fig. 18;
Fig. 21 is a front view of Fig. 20;
Fig. 22 is a sectional vied taken along the line 22-22 in Fig. 21;
Fig. 23 is a sectional view taken along the line 22-22 in Fig. 21;
Fig. 24 is an enlarged perspective view showing the disassembled state of the duct and flange according to the fourth embodiment of the invention;
Fig. 25 is a side view, in section, of Fig. 24;
Fig. 26 is a side view, in section, showing the inserted state of the flange corresponding to Fig. 25;
Fig. 27 is a side view, in section, showing a fifth embodiment of the invention corresponding to Fig. 26;
Fig. 28 is a perspective view showing a sixth embodiment of the invention corresponding to Fig. 24;
Fig. 29 is a side view, in section, showing the inserted state of the flange of Fig. 28;
Fig. 30 is a side view, in section, showing a seventh embodiment of the invention corresponding to Fig. 29; and
Fig. 31 is a side view, in section, showing an eighth embodiment of the invention corresponding to Fig. 29.

### DETAILED DESCRIPTION OF THE PREFERRED EMBODIMENTS

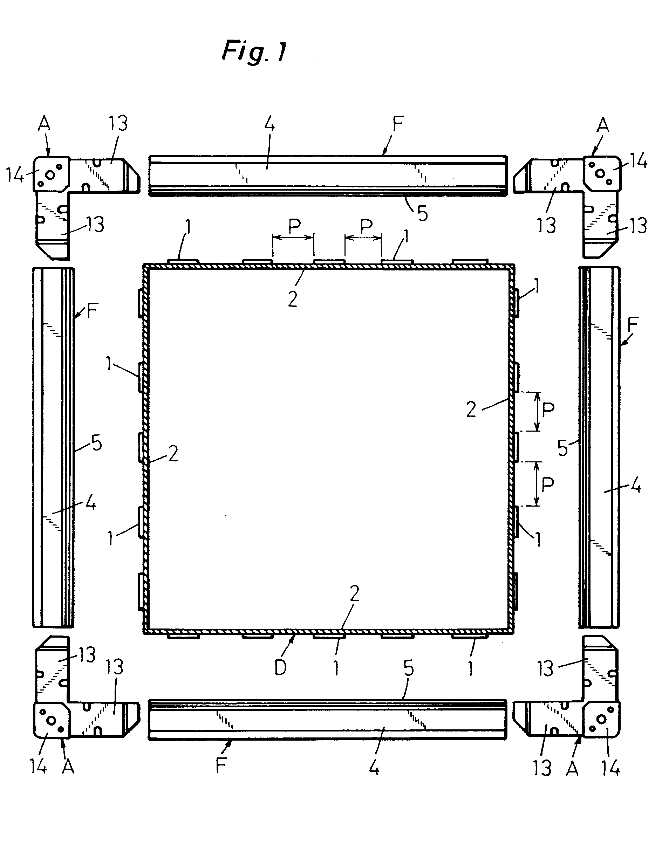

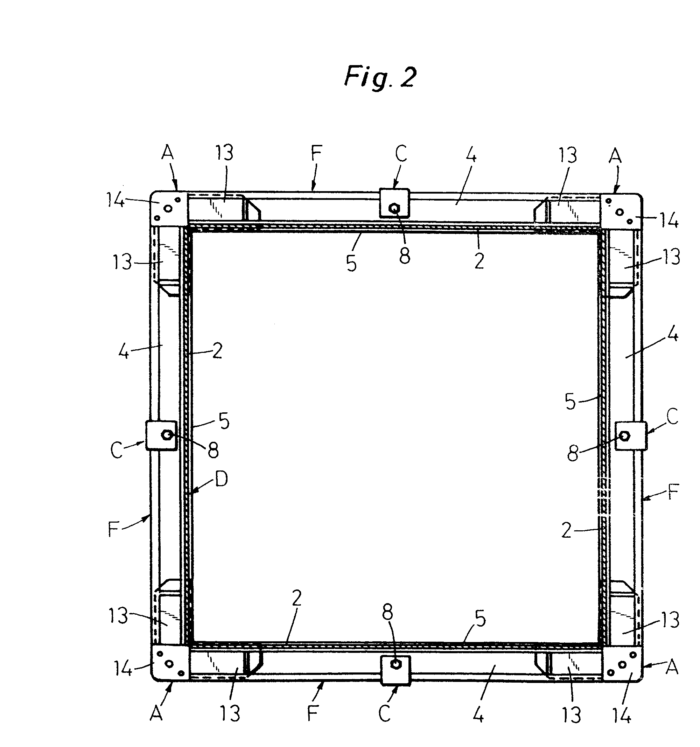

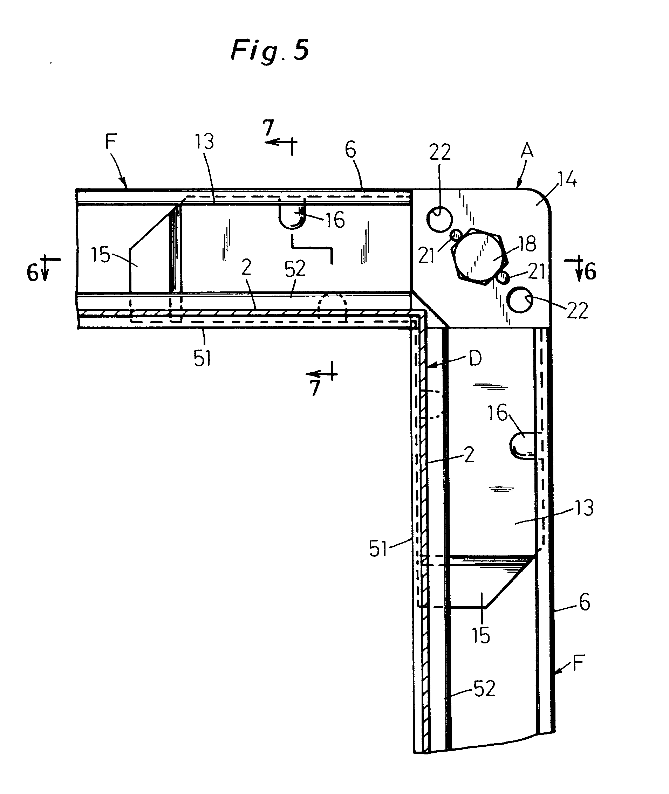

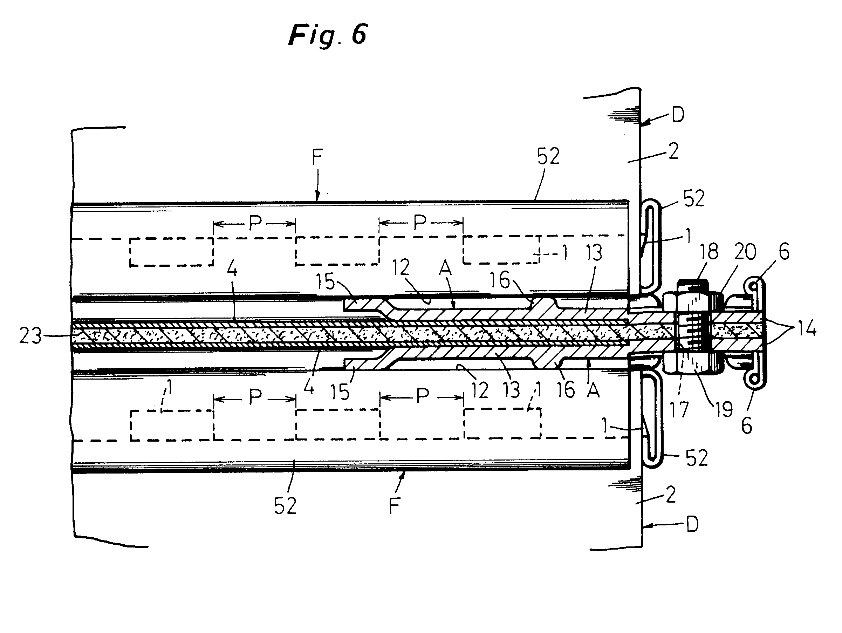

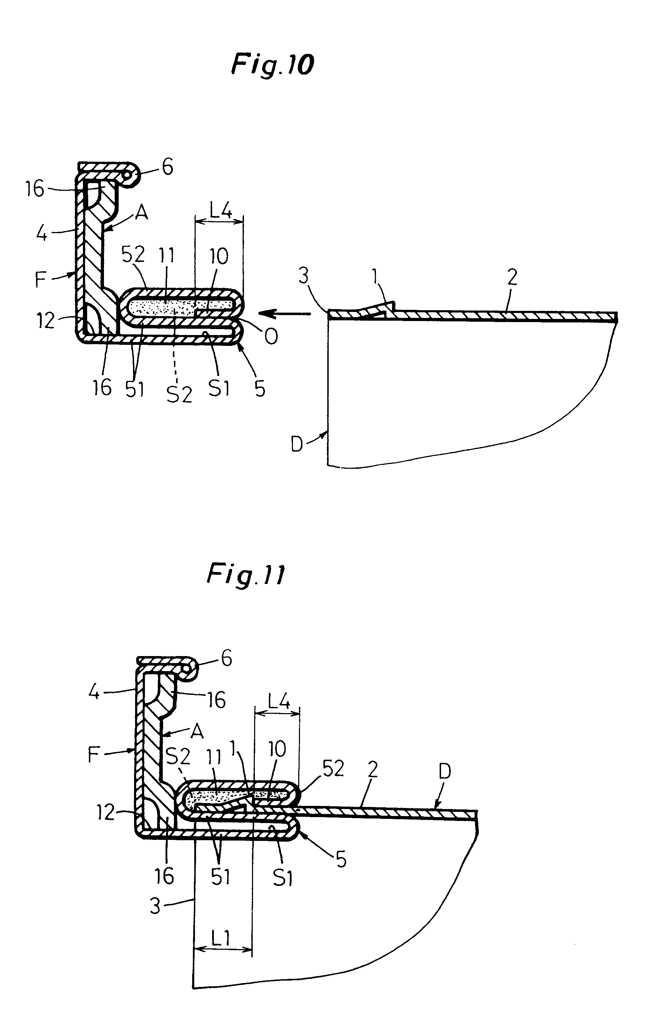

The concrete arrangement of the present invention will now be described with reference to the drawings. First, referring to Figs. 1 through 13 showing a first embodiment of the present invention, the character D denotes a duct of fixed length, which is formed of zinc plate, stainless steel plate or the like metal plate and shaped quadrangular as seen in front view. So long as such duct can maintain air tightness when it is used as an air duct, it may be formed of a pair of opposed L-shaped metal plates which are then integrally framed in quadrangular form as a whole or it may be formed by continuously bending a single metal plate into a quadrangular form.

The numeral 1 denotes a plurality of wedge pawls disposed in the vicinity of the open end of said duct D and formed by being inwardly lanced up from each the four lateral drum surfaces 2 of the duct D so that they are arranged in a row at intervals having a fixed distance pitch P.

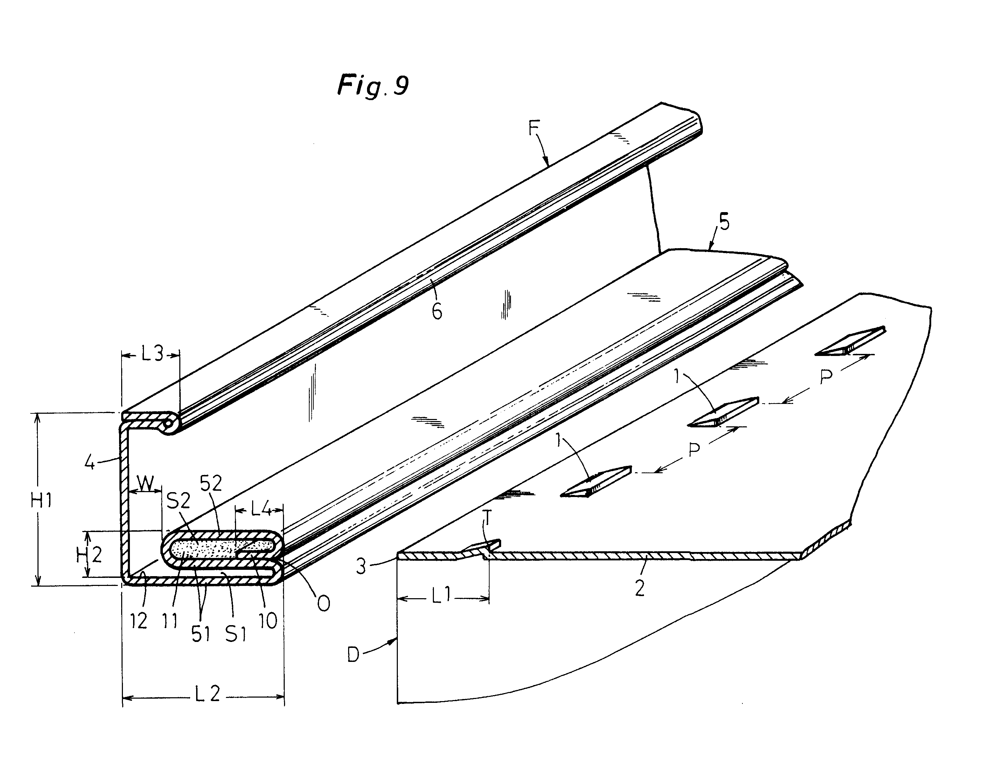

Furthermore, each of the wedge pawls 1, as is clear from Figs. 9 through 11, has a substantially right triangular section which rises the higher, the farther it extends away from the cut open end edge 3 of the duct D. This arrangement makes it easier to insert the attaching base of a flange to be later described and provides a wedge action such that once it is inserted, it will never come off.

Such wedge pawls 1 can be formed by inserting a manual punching tool (not shown) in the duct at the cut end edge thereof in such a manner as to nip the drum surface 2 and manipulating said punching tool to lance up such pawls in said wedge form.

The character L1 denotes the distance between the cut open end edge 3 of the duct D and the active vertex T of the wedge pawl 1, said distance L1 corresponding to the depth to which said punching tool can be inserted. The plurality of wedge pawls 1 are regularly spaced on an imaginary line holding said distance L1; thus, while feeding the duct D to an automatic machine installed in a manufacturing plant, wedge pawls 1 may be continuously lanced up in the drum surface 2.

In addition, in the illustrated embodiment, the height of the wedge pawls 1 is about 1 mm, which is approximately equal to the plate thickness of the duct D, said lancing-up being effected such that they are continuous with the drum surface 2, rather than separated from the latter. However, there would be no trouble even if the active vertexes T, in relation to their height, are cut and separated from the drum surface 12 of the duct D. The reason is that the presence of a sealant to be later described maintains the air tightness of the duct D.

The character F denotes a separate flange serving as a piping joint for said duct D. It is made by bending process of the same single metal plate as that of the duct D by a forming machine and has a basic L-shaped cross section comprising a connection mast 4 vertically extending by a given height H1 radially of the duct D and a lip-like attaching base 5 extending by a fixed length L2 longitudinally of the duct D.

The connection mast 4 of the flange F is of so-called single construction, having an eaves-like top hook 6 continuously bent and extended by a fixed length L3 from the overhanging front end thereof in the direction of the presence of the attaching base 5.

Furthermore, said top hook 6, turned back to assume an outwardly or inwardly reversed state to be superposed, is reinforced as a double construction. The overhanging front end is somewhat inwardly bent literally as a hook type to thereby uninvertably receive a corner connection angle bar for the duct D to be later described. Using the overhanging front end of the top hook 6 as a reinforced flange edge, it may be stably engaged by a clamp member C for the flange F.

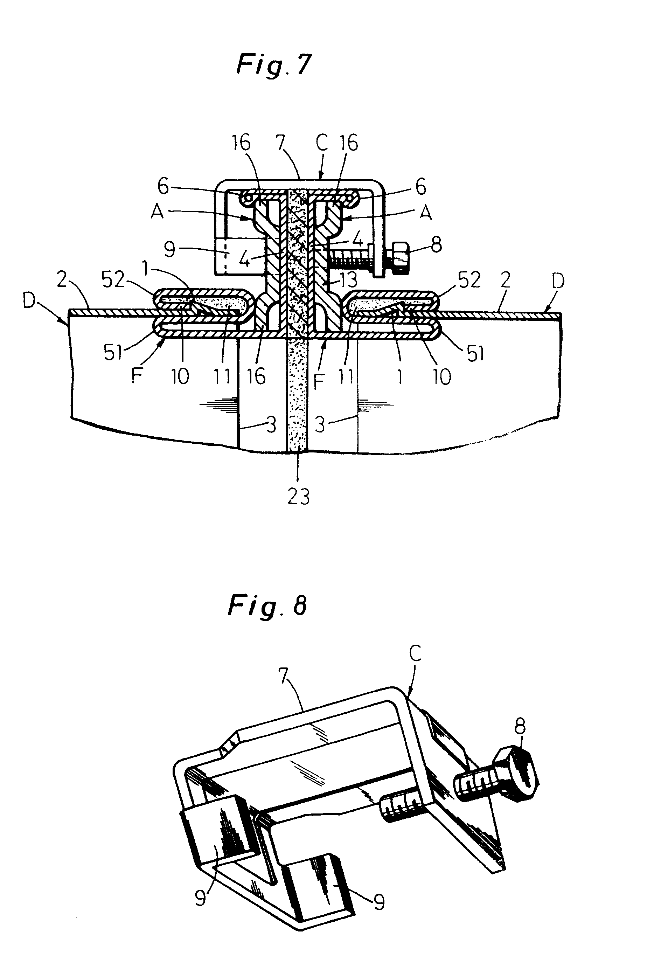

The clamp member C serves to clamp together two adjoining flanges F for the duct D and as shown in Fig. 8 it is formed of a single steel plate, and preferably it comprises a main body plate 7 bent in inverted U-shape for fitting on the two connection masts 4 of adjoining flanges F, a set bolt 8 inwardly horizontally screwed into one of the opposed plate walls, and a pair of engaging pieces 9 bent inwardly from the other plate wall at right angles along bending edges which are at right angles with the bending edges of the inverted U-shape in the main body plate 7 and symmetrically with respect to the axis of the set bolt 8.

Thus, when the set bolt 8 is screwed to clamp together the connection masts 4 of two adjoining flanges F, the clamping pressure is equally divided between and stably supported by the pair of engaging pieces 9. Thus, the connection masts 4 of the flanges F are clamped and fixed in position at a total of three points, i.e., the front end of the set bolt 8 and the two engaging pieces 9, eliminating the possibility of producing rattling or swaying.

On the other hand, the attaching base 5 of the flange F is not limited to the flat plate configuration of simple single construction extending from the proximal end of the connection mast 4 by said fixed length L2 longitudinally of the duct D but may be of construction as shown in Figs. 9 through 11 wherein the metal plate is turned back in corrugated form continuously meandering to provide a laminated structure; thus, the attaching base can be inserted at its open end edge 3 on the drum surface 12 of the duct D, increasing the strength in such inserted state.

That is, in Figs. 9 through 11 which clarify this point, the numeral 51 denotes an inner base lip outwardly turned back from the overhanging front end of the attaching base 5 to assume a continuously reversed state, and the interior defined by the two turned-back layers serves as a cushion space S1, so that it covers the drum surface 2 from the inside while elastically internally contacting the drum surface 2 of the duct D. The outwardly turned back portion of the inner base lip 51 is smoothly arcuately bent to serve as the lower lip which forms the insertion port O of the attaching base 5.

The extended front end of the inner base lip 51 does not reach the vertical position of the connection mast 4 with an opening of fixed with W defined therebetween. And it is turned back and extended in the opposite direction to meander from its front end in the laminated state of the inner base lip 51, thereby forming an outer base lip 52 adapted to cover the drum surface 2 of the duct D from the outside.

Eventually, the attaching base 5 of the flange F is laminated in the corrugated state bent in substantially S-shape as a whole having a total of three layers including said inner and outer base lips 51 and 52, said three layers extending substantially in parallel with each other.

Further, the extended front end of the outer base lip 52 is turned back inwardly, which is opposite to said meandering direction, so as to form a hook 10 for holding said wedge pawls 1 which outwardly rise from the drum surface 2 of the duct D. The inwardly turned-back portion of the outer base lip 52 is smoothly arcuately bent to serve as the upper lip of the insertion port to be later described.

Furthermore, the holding hook 10 forming the extended front end of said outer base lip 52 is inwardly turned back by a fixed length L4, whereby it is held elastically pressed against the inner base lip 51. As a result, the attaching base 5 assumes the laminated state having a total of four layers at the turned-back portion of the holding hook 10.

Further, a sealed bag is defined by the action of said elastic urging force between one layer of the inner base lip 51 forming the partition wall between it and the outer base lip 52 and one layer of the outer base lip 52 and the sealed bag associated with the outer base lip 52 serves as a cushion space S2 elastically and externally pressed against the drum surface 2 of the duct D. Said cushion space S2 is filled with a sealant 11.

The sealant 11 is fed into the cushion space S2 during continuous turning-back operation on the attaching base 5; thus, even if said wedge pawls 1 are lanced up, air tightness is ensured.

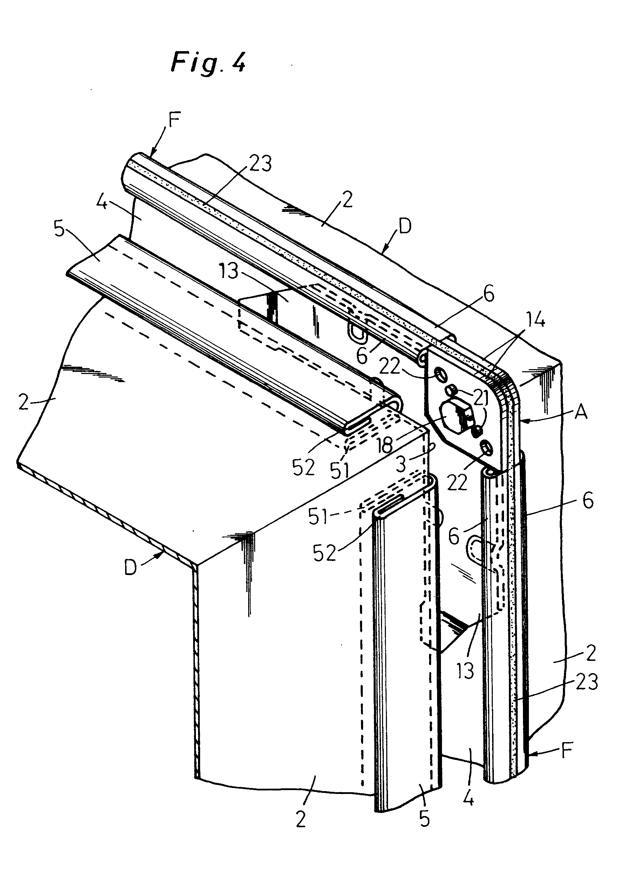

The attaching base 5 of the flange F can be inserted in the open end of the duct D against the elastic force with an insertion port O defined between the holding hook 10 in the outer base lip 52 and the inner base lip 51; then, as is clear from Figs. 4, 7 and 11, the wedge pawls 1 outwardly erected engage the holding hook 10, so that they are locked in the inseparable fixed state. Further, air leakage through the insertion port O is also prevented by the sealant 11 filled in the cushion space S2.

In that case, in the first embodiment which is clear from Figs. 9 through 11, the lower lip formed of the outward turned-back portion of the inner base lip 51 and the upper lip formed of the inward turned-back portion of the outer base lip 52 are smoothly arcuately bent and thereby disposed on the same line and can be reliably inserted in the cut open end edge 3 of the duct D.

It has been mentioned that the boundary bent portion extending from the extended front end of the inner base lip 51 to the outer base lip 52 does not reach the vertical position of the connect ion mast 4. As a result of this arrangement, a corner connection angle bar receiving U-shaped groove 12 of fixed depth recessed in opposed relation to the given height H2 and resulting from the lamination of the two base lips 151 and 152 is defined at the corner where the attaching base 5 and the connection mast 4 cross each other and in vertically opposed relation to the top hook 6 of the connection mast 4. The U-shaped groove 12 is in band form opened by a fixed width W.

The U-shaped groove 12 of the attaching base 5 cooperates with the top hook 6 of the connection mast 4 to stably support one of the wing plates of the corner angle bar A for the duct D which connect the adjacent corners, as shown in Figs. 7, 10 and 11, restraining it from being inverted. The corner angle bar A will be sometimes integrally fixed to the flange F by the inward caulking of the top hook 6.

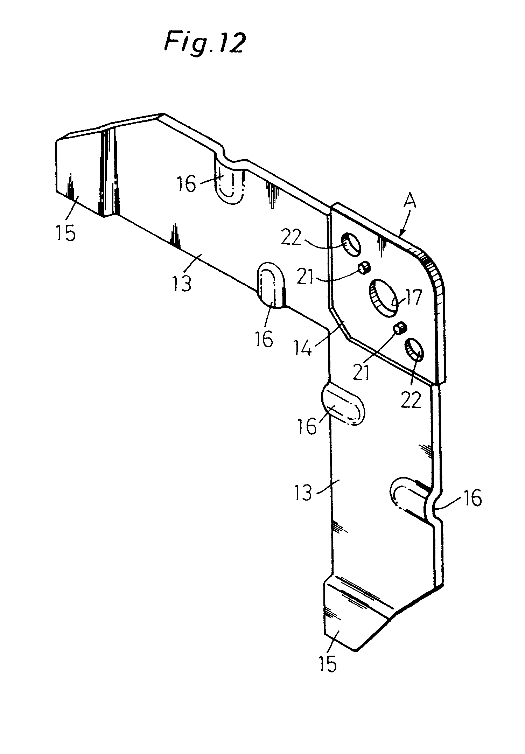

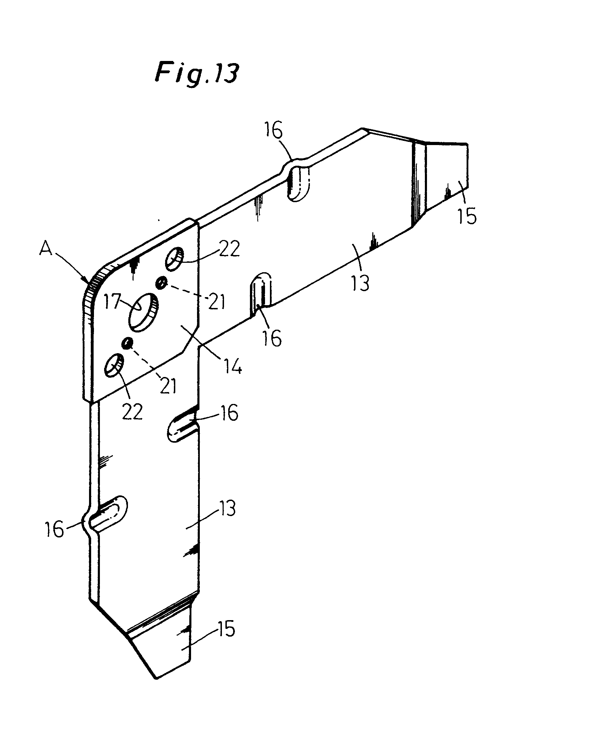

It goes without saying that the corner angle bar A is a metal fixture for integrally connecting the adjacent corners of quadrangular ducts D and, as is clear from Figs. 12 and 13, it is formed of a single steel plate by punching process and it is L-shaped as a whole, comprising a pair of wing plates 13 to be fitted to the connection masts 4 of the flanges F in a lining manner and a corner plate 14 to be opposed to the corner of the duct D.

Furthermore, the tapering extended front end of each wing plate 13 is bent up to form a bent portion 15 adapted for intimate contact with the connection mast 4 to prevent rattling, and reinforcing beads 16 for prevention of rattling are lanced up from the outgoing and incoming corner edges in the intermediate region of each wing plate 13.

However, instead of separately forming the bent portions 15 and the reinforcing beads 16, a reinforcing bead of fixed length may be lanced up which extends on the longitudinal center line of each wing plate 13.

Particularly as shown in Figs. 12 and 13, a pair of concomitant rotation preventing projections 21 capable of engaging the angular head 19 of a connection bolt 18 or an angular head nut 20 are lanced up around a bolt receiving through-hole 17 opening in substantially the middle or corner of the corner plate 14, and a pair of through-holes 22 for receiving suitable bars or other manipulating tools are formed in the corner plate 14, so as to align the through-holes 17 of adjoining corner angle bars A with each other; this arrangement is effective.

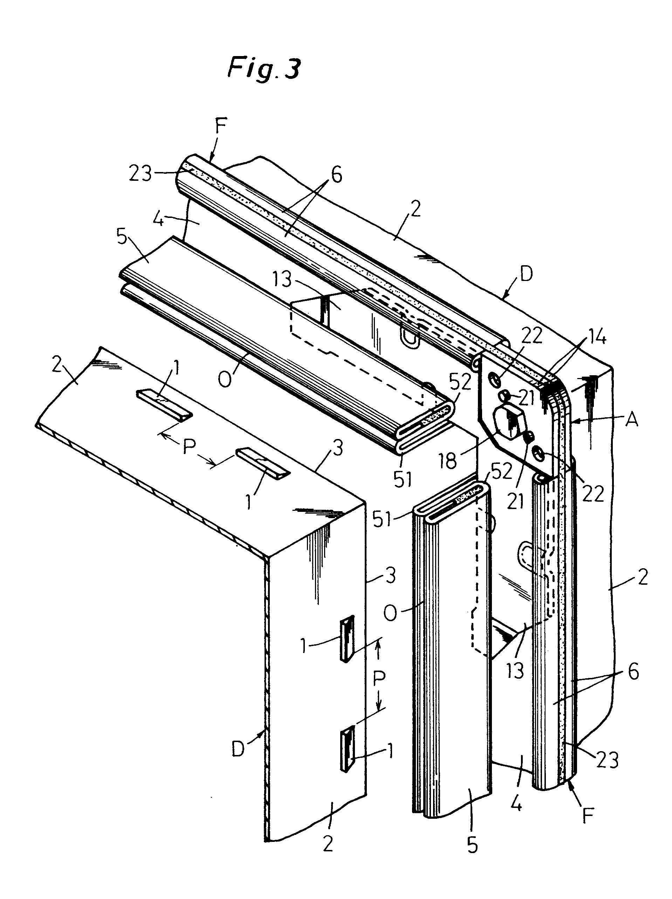

Then, as is clear from Figs. 3 through 6, a connection bolt 18 is passed through the bolt receiving through-hole 17 of the corner angle bar A and a tightening angular head nut 20 is tightened to integrally connect the adjacent corners of ducts D. In this connection, the possibility of the connection bolt 18 and angular head nut 20 being concomitantly rotated is reliably eliminated by said pair of projections 21, with the result that the connecting operation can be performed quickly and safely.

Further, if it should happen that the bolt receiving through-holes 17 of the corner angle bars A are not aligned with each other making it difficult to insert the connection bolt 18, said bolt-receiving through-holes 17 can be easily aligned with each other by inserting suitable bars or other manipulating tools into the manipulating tool receiving through-holes 22 opening in the corner plates 14 and prying the corner angle bars A relative to each other for correction; thus, the operating efficiency in centering operation is increased.

In addition, the numeral 23 denotes a gasket for air tightness interposed in the wrapped state between the connection masts 4 of the adjoining flanges F and between the corner angle bars A.

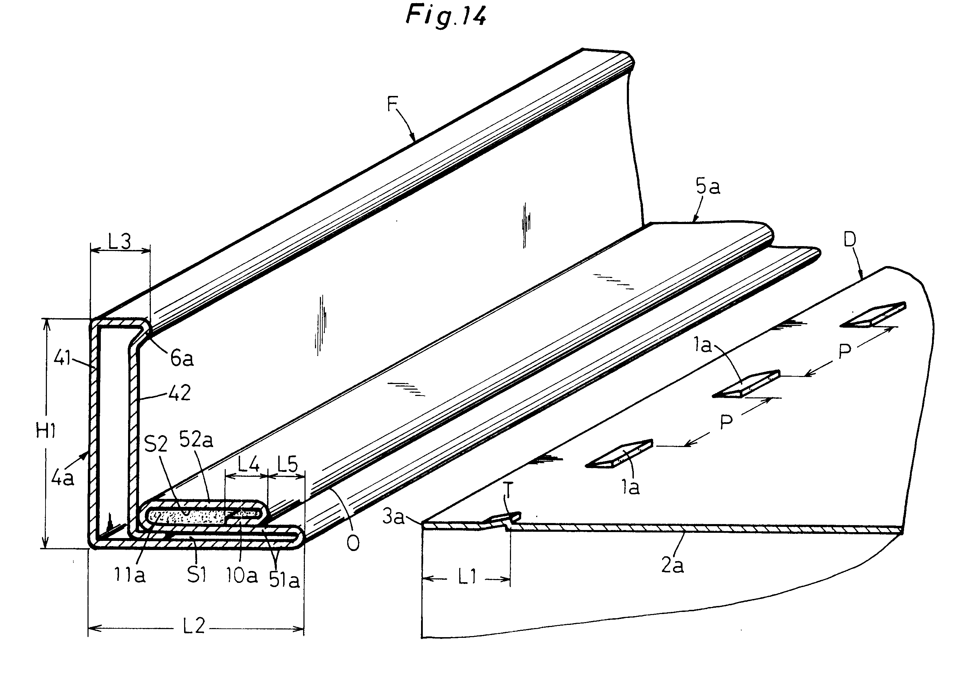

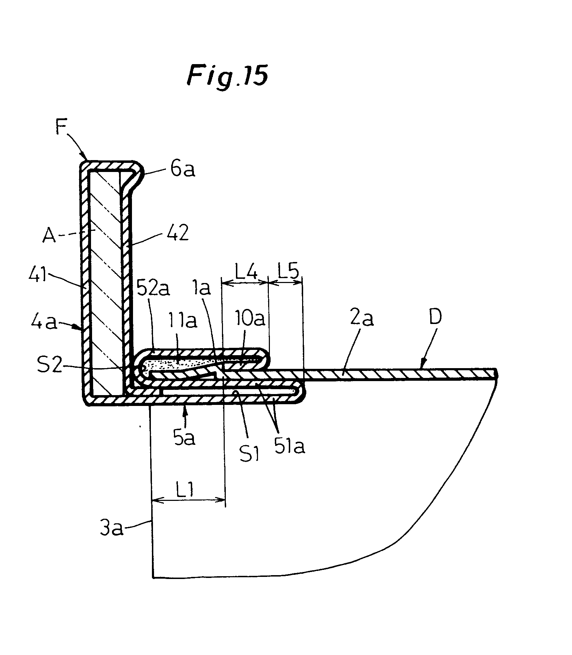

Figs. 14 and 15 show a second embodiment of the invention, wherein the connection mast 4a of the flange F is of so-called double construction made of a single metal plate turned back in into substantially inverted U-shaped cross section, capable of receiving the wing plate 13 of the corner connection angle bar A in the hollow space between the front and rear mast pieces 41 and 42.

The character 6a denotes a locking shoulder positioned at the top of the connection mast 4a and somewhat extending or bent rearwardly from the rear mast piece 42 in the direction of presence of the attaching base 5a, and a clamp member C which clamps together two adjoining flanges F for the duct D can stably and firmly be applied to the two connection masts 14 of adjoining flanges F.

And the inner base lip 51 a of the attaching base 5a is continuously extended longitudinally of the duct D from the proximal end of the front mast piece 41 forming the bag-like connection mast 4a and is outwardly turned back from the extended front end to assume the meandering reversed state, so that the interior defined by two turned-back layers forms a cushion space S1, thereby the inner base lip 51 a is elastically internally contacted with the drum surface 2a of the duct D.

At the position where the turned-back front end of said inner base lip 51 a contacts the rear mast piece 42 of the connection mast 4a, it is turned back in the opposite direction to meander, thereby forming an outer base lip 52a facing the drum surface 2a of the duct D from the outside.

Eventually, the attaching base 5a of the flange F is laminated in the corrugated state bent in substantially S- or or Z-shape as a whole having a total of three layers including said inner and outer base lips 51 a and 52a, and the extended front end of the outer base lip 52a is turned back inwardly, which is opposite to said meandering direction, so as to form a holding hook 10a which is closed as it it elastically urged against the inner base lip 51a, said holding hook 10a being adapted to hold the wedge pawls 1 a which rises outwardly from the drum surface 2a of the duct D.

Further, the turned-back front end of the outer base lip 52a is inwardly turned back by a length L4 to form a hook 10a and is closed as it is elastically urged against the inner base lip 51 a, thus defining a cushion space S2 in the form of a sealed bag associated with the outer base lip 52a, said cushion space S2 being filled with a sealant 11 a for sealing the duct D.

In that case, the insertion port O of the attaching base 5a in the second embodiment is also formed of the inner and outer base lips 51 a and 52a, but as shown in Figs. 14 and 15, the front ends of the base lips 51 a and 52a are displaced in staggered relation to each other to facilitate insertion of the insertion port O on the open end of the duct D. The character L5 indicates a given amount of stagger provided by different displacements.

Referring to the formation of the connection flange F for the duct D by continuous bending of a single metal plate, in the case of the first embodiment one cut end of the metal plate is outwardly or inwardly turned back to form the top hook 6 of the connection mast 4, while the other cut end of the metal plate is inwardly turned back from the outer base lip 52 of said attaching base 5 to form the hook 10 for holding the wedge pawls 1.

On the other hand, although the second embodiment is the same in that the other cut end of the metal plate is formed as the hook 10a for holding the pawls 1 a, it differs in that one cut end of the metal plate is extended vertically downward in parallel with the front mast piece 41 to form the rear mast piece 42 of the connection mast 4a and the proximal end of the rear mast piece 42 is fixed in butting relation to the inner base lip 51 a of the attaching base 5a.

In addition, the rest of the arrangement of the second embodiment is substantially the same as the first embodiment; therefore, the corresponding numerals used in Figs. 9 through 11 with the letter "a" suffixed thereto are entered in Figs. 14 and 15 to omit a detailed description thereof.

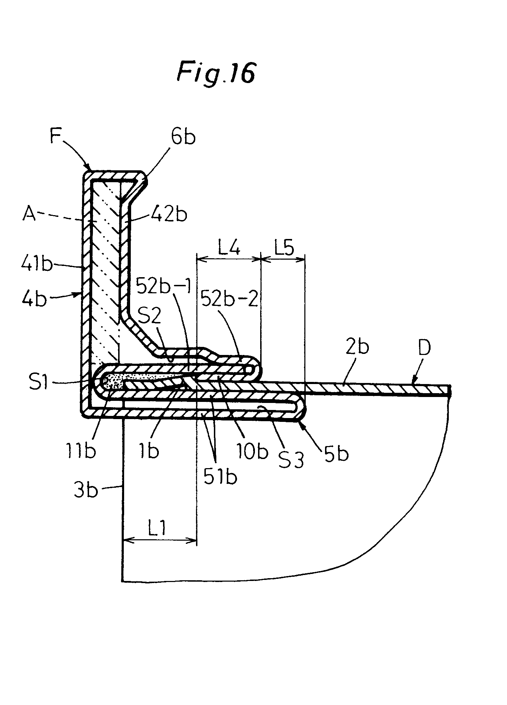

Fig. 16 shows a third embodiment of the invention, wherein the inner base lip 51 b of the attaching base is continuously extended longitudinally of the duct D from the proximal end of the front mast piece 41 b forming the bag-like mast piece 4b, and the extended front end is outwardly turned back to obtain the cushion space S3 between two turned-back layers.

Further, at the position where the outwardly turned-back front end of the inner base lip 51 b contacts the front mast piece 41 b of the connection mast piece 4b, it is reversely turned back to meander to form a first outer base lip 52b-1 facing the drum surface 2b of the duct D from the outside; thus, it is laminated in the corrugated state bent in substantially S- or Z-shape as a whole having a total of three layers including said inner outer base lip 51 b. One cut end of the metal plate forms the front end of the first outer base lip 52b-1.

On the other hand, a second outer base lip 52b-2 surrounding the front end of said first outer base lip 52b-1 is continuously extended longitudinally of the duct D from the proximal end of the rear mast piece 42b of the connection mast 4b, and the extended front end is inwardly turned back, so that the inwardly turned-back front end of the second outer base lip 52b-2 serves as the hook 10b for holding the wedge pawls 1 and is closed as it is elastically urged against the inner base lip 51b. The holding hook 10b is positioned at the other cut end of the metal plate, and in this portion the attaching base 5b is in the laminated state having a total of five layers.

In that case, the cushion space S2 is defined between two adjacent layers of the first outer base lip 52b-1 continuous with the inner base lip 51 b and the second outer base lip 52b-2 surrounding said first outer base lip 52b-1. Further, the holding hook 10b of given length L4 forming the inwardly turned-back front end of the second outer base lip 52b-2 is closed as it is elastically urged against the inner base lip 51b, and the attaching base 5b of the flange F can be inserted on the open end of the duct D against the urging force.

Furthermore, the continuously turning-back of the first outer base lip 52b-1 from the inner base lip 51 b, coupled with the holding hook 10b disposed between adjacent layers under said elastic urging force, results in the sealed bag-like cushion space S1 being defined between the adjoining layers, and a sealant 11 b for sealing the duct D is filled in said cushion space.

In addition, the rest of the arrangement of the third embodiment is substantially the same as the second embodiment; therefore, the corresponding numerals used in Figs. 14 and 15 with the letter "b" suffixed thereto are entered in Fig. 16 to omit a detailed description thereof.

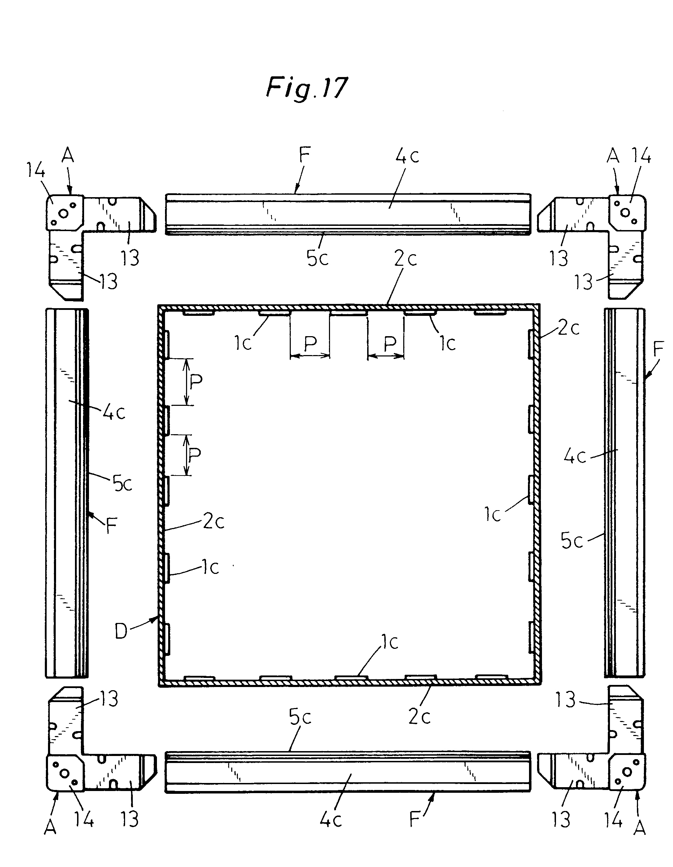

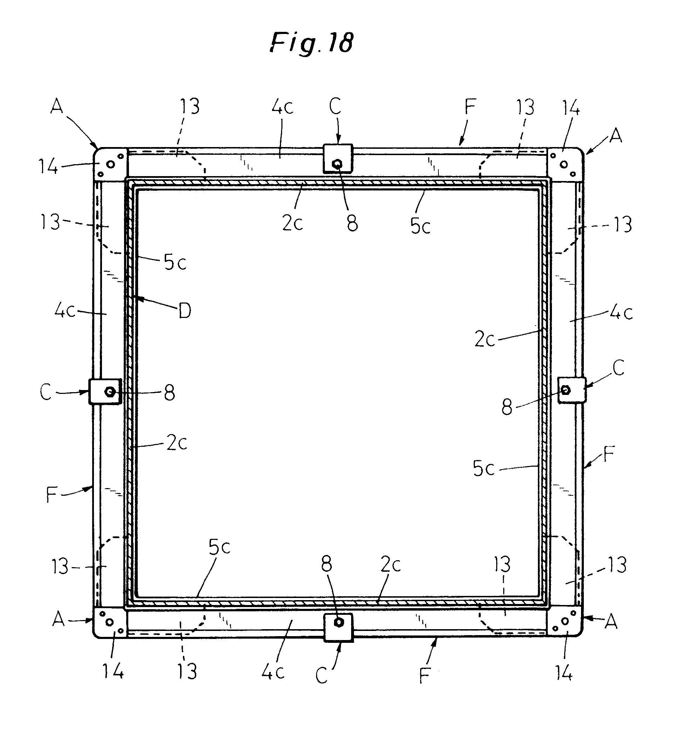

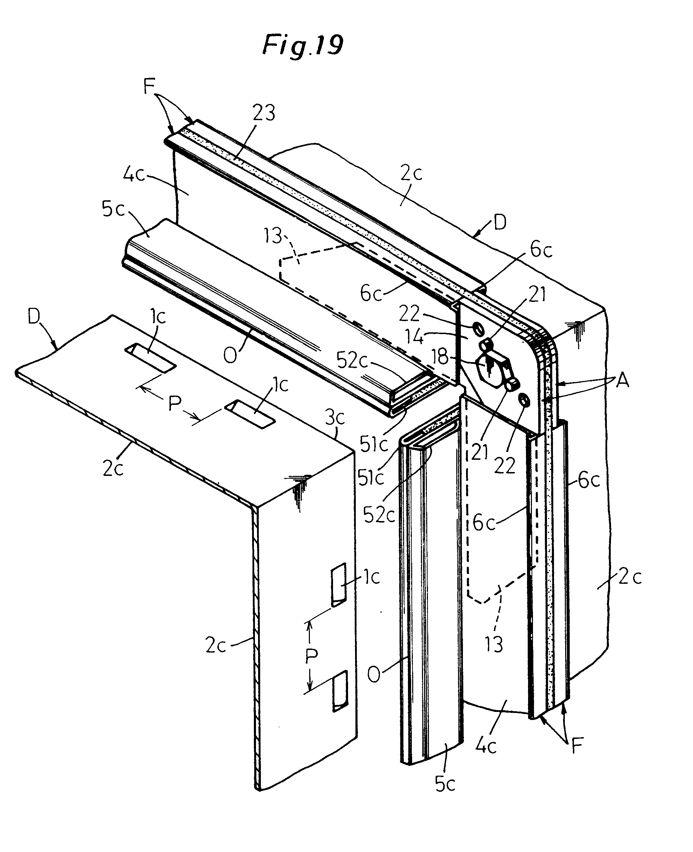

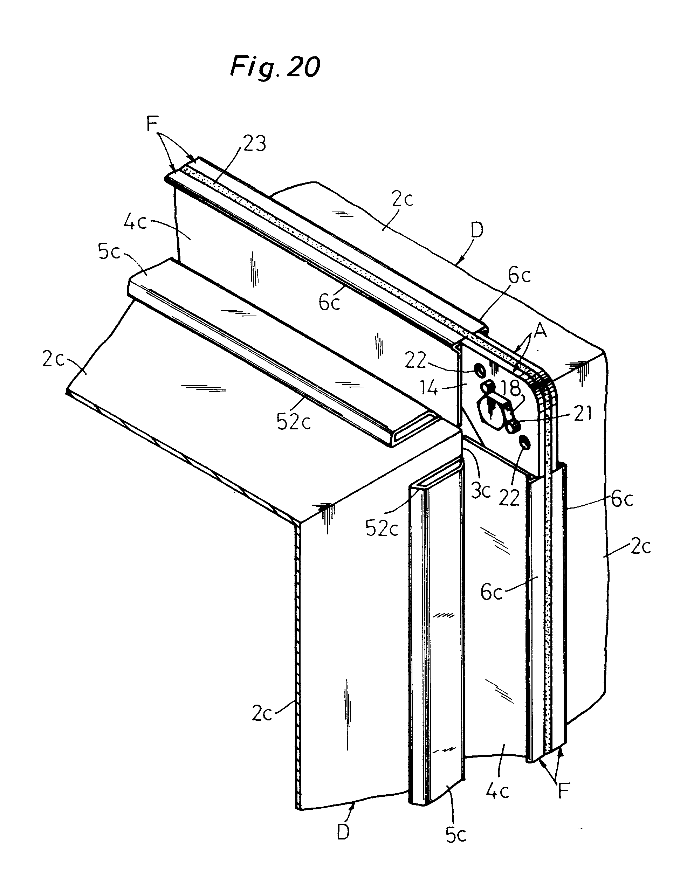

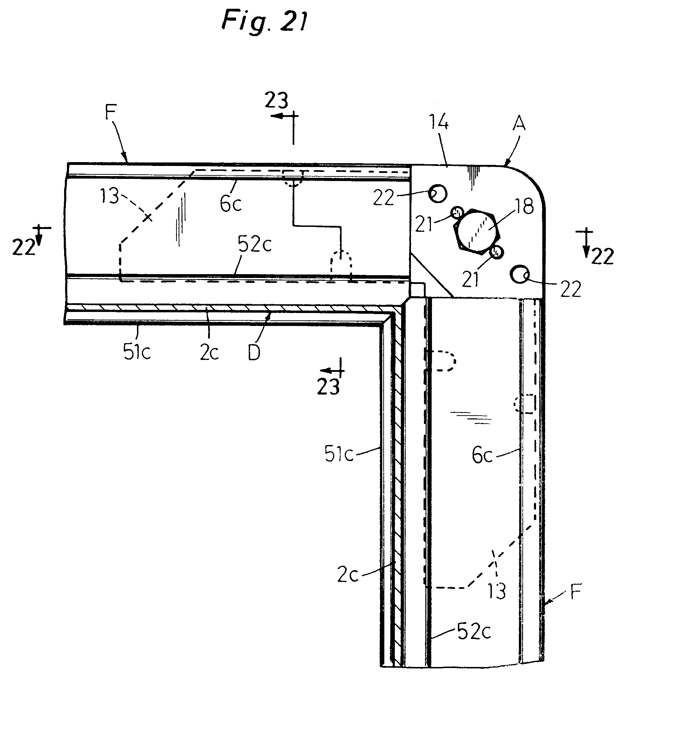

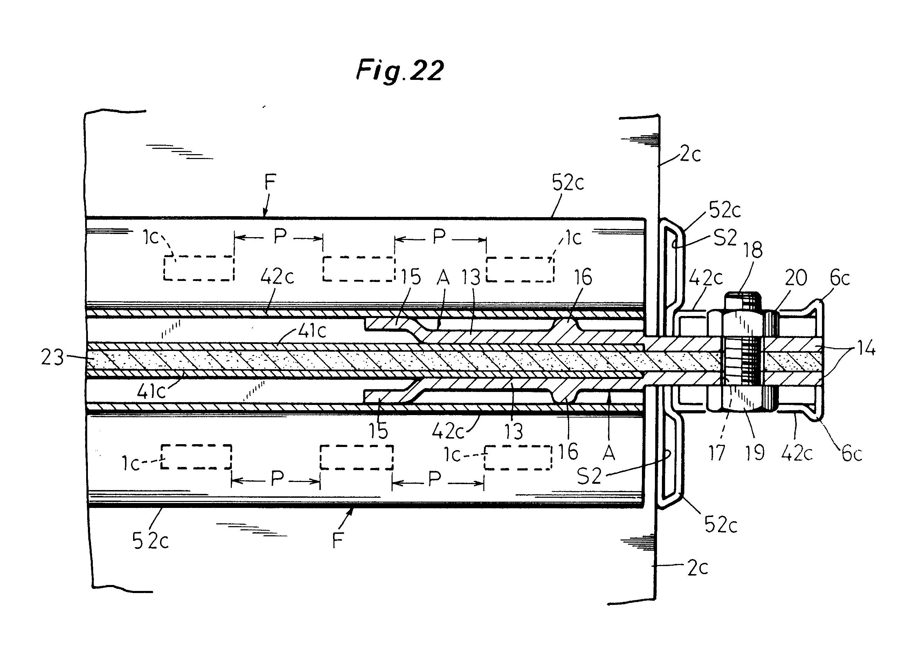

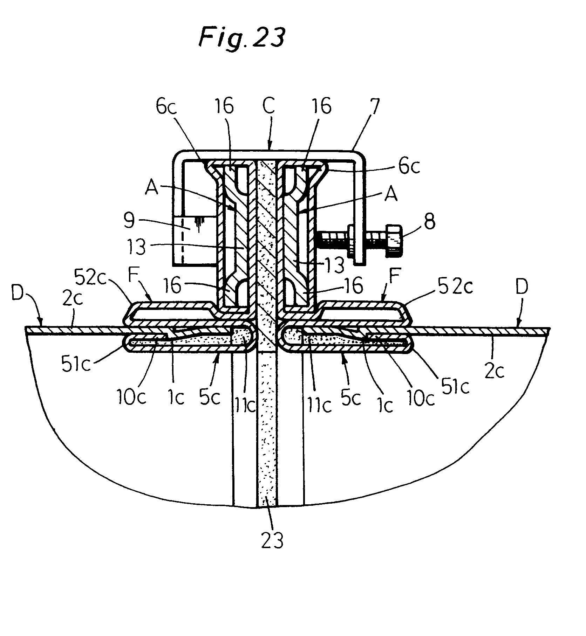

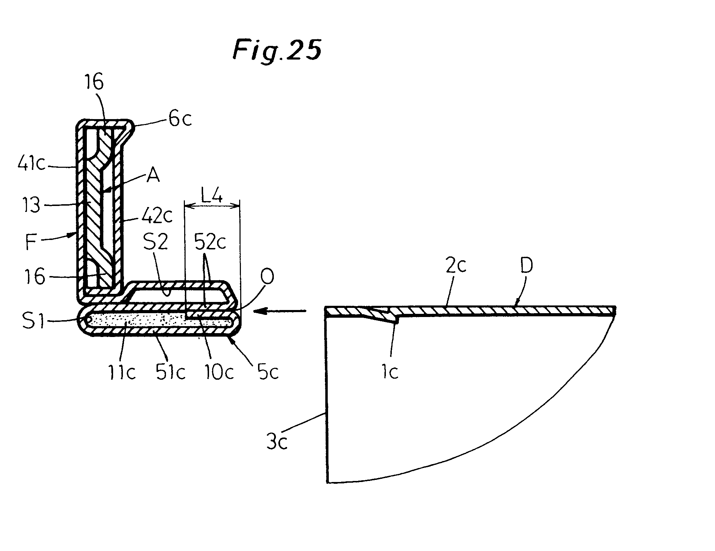

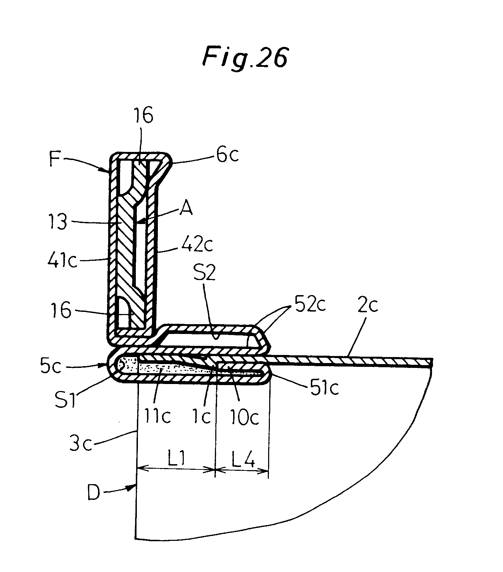

Figs. 17 through 26 show a fourth embodiment of the present invention, wherein a plurality of wedge pawls 1 are lanced up inwardly, which is opposite to the direction stated in the third embodiment, and in relation thereto a hook 10c for holding said wedge pawls 1 is formed by bending in the following manner.

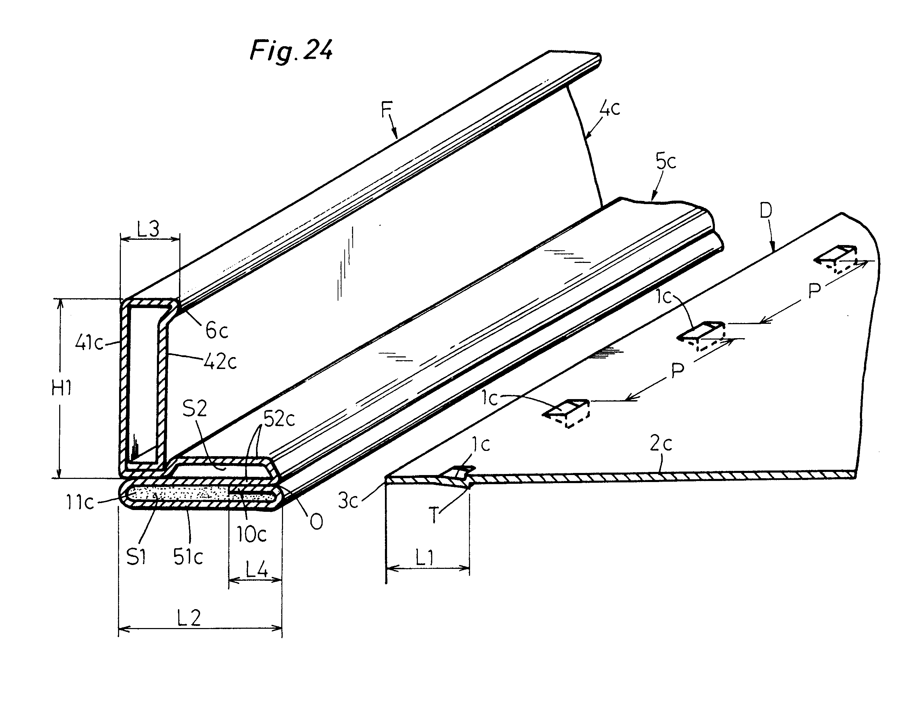

The outer base lip 52c of the attaching base 5c, as is clear from Figs. 24 through 26, is continuously extended longitudinally of the duct D from the proximal end of the front mast piece 41 c forming the bag-like connection mast 4c of the same double construction as in the second embodiment and inwardly continuously turned back to meander reversely from the extended front end, so that the interior defined by the two turned-back layers provides a cushion space S2; thus, the outer base lip 52c having such cushion space S2 is elastically externally contacted with the drum surface 2c of the duct D. The inwardly turned-back portion of the outer base lip 52c is bent in smooth arcuate form to serve as the upper lip of the insertion port O.

As soon as the inwardly turned-back front end of the outer base lip 52c reaches the proximal end of the connection mast 4c, it is turned back and extended to meander in the opposite direction, thereby forming the inner base lip 51 facing the drum surface 2c of the duct D from the inside.

That is, the attaching base 5c of the flange F is laminated in the corrugated state bent in substantially S- or Z-shape as a whole having a total of three layers including said outer and inner base lips 52c and 51 c, said three layers extending substantially in parallel.

In that case, the turned-back portion extending from the outer base lip 52c to the inner base lip 51 c is positioned at the proximal end of the connection mast 4c, but in this case, unlike the second embodiment shown in Figs. 14 and 15, it is contacted with the bottom of the bag-like connection mast 4c in such a manner as to raise it.

Further, the turned-back front end of said inner base lip 51c is turned back outwardly, which is opposite to said meandering direction, by a given length, thus forming a hook 10c for holding said wedge pawls 1 inwardly raised from the drum surface 2c of the duct D. The outwardly turned-back portion of said inner base lip 51 c is bent in smooth arcuate form to provide the lower lip cooperating with the upper lip of the outer base lip 52c to form the insertion port O.

Furthermore, the holding hook 10c forming the front end of said inner base lip 51 c is outwardly turned back and extended by a length L5 and thereby closed as it is elastically urged against the outer base lip 52c, with the result that the sealed bag-like cushion space S1 between adjacent layers with the outer base lip 52c is defined in the interior of the inner base lip 51 c. In the turned-back portion of the holding hook 10c, the attaching base is laminated in the form of a total of four layers.

And the cushion space S1 associated with the inner base lip 51 c is filled with a sealant 11 for sealing the duct D to prevent air leakage through the insertion port O, making it possible to maintain the duct D air-tight.

It goes without saying that the attaching base 5c can be inserted on the open end edge 3c of the duct by spreading the insertion opening O against the elastic urging force. In addition, the rest of the arrangement of the fourth embodiment is substantially the same as the first embodiment; therefore, the corresponding numerals used in Figs. 1 through 13 with the letter "c" suffixed thereto are entered in Figs. 17 through 26 to omit a detailed description thereof.

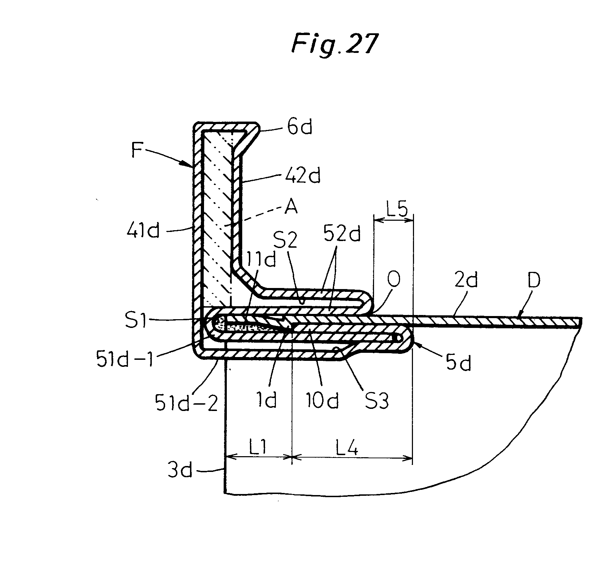

Fig. 27 shows a fifth embodiment of the present invention, wherein the outer base lip 52d of the attaching base 5d is continuously extended longitudinally of the duct D from the proximal end of the rear mast piece 42d forming the bag-like mast 4d and the extended front end is inwardly turned back to define a cushion space S2 between the two turned-back layers.

The inwardly turned-back front end of the outer base lip 52d is turned back to meander in the opposite direction from the position where it contact the front mast piece 41 d of the connection, forming the first inner base lip 51d-1 facing the drum surface 2d of the duct D from the inside; thus, it is bent in the corrugated state in substantially S- or Z-shape with said outer base lip 52d as a whole having a total of three layers. Thus, one cut end of the metal plate forms the front end of the first inner base lip 51 d-1.

On the other hand, a second inner base lip 51 d-2 surrounding the front end of said first inner base lip 51d-1 is continuously extended longitudinally of the duct D from the proximal end of the front mast piece 41 d of the connection mast 4d, and the extended front end is outwardly turned back, so that the outwardly turned-back front end of the second inner base lip 51 d-2 serves as the hook 10d for holding the wedge pawls 1 and is closed as it is elastically urged against the outer base lip 52d. The holding hook 10b is positioned at the other cut end of the metal plate, and in this portion the attaching base 5b is in the laminated state having a total of five layers. In this sense, it closely resembles the third embodiment shown in Fig. 16.

In that case, the cushion space S3 is defined between two adjacent layers of the first inner base lip 51d-1 continuous with the outer base lip 52d and the second inner base lip 51 d-2 surrounding said first inner base lip 51d-1. Further, the holding hook 10d of given length L4 forming the outwardly turned-back front end of the second inner base lip 51 d-2 is closed as it is elastically urged against the outer base lip 52d, and the attaching base 5d of the flange F can be inserted on the open end of the duct D against the urging force.

Furthermore, the continuously turning-back of the first inner base lip 51d-1 from the outer base lip 52d, coupled with the holding hook 10d disposed between adjacent layers under said elastic urging force, results in the sealed bag-like cushion space S1 being defined between the adjacent layers, and a sealant 11 d for sealing the duct D is filled in said cushion space.

In addition, the rest of the arrangement of the fifth embodiment is substantially the same as the fourth embodiment; therefore, the corresponding numerals used in Figs. 24 through 26 with the letter "d" suffixed thereto are entered in Fig. 27 to omit a detailed description thereof.

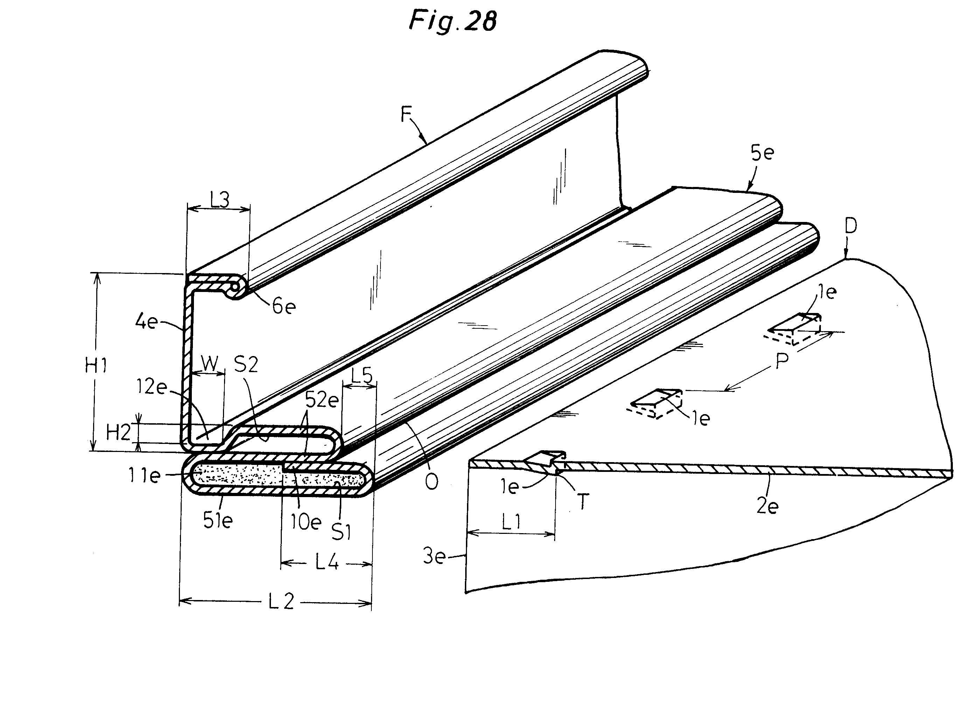

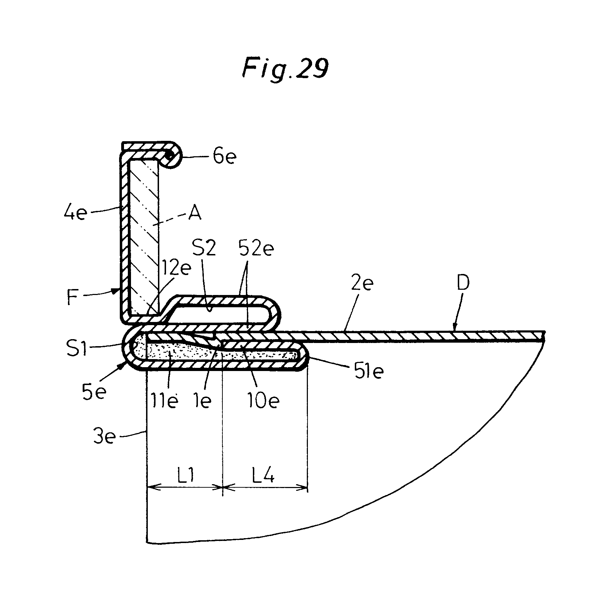

Figs. 28 and 29 show a sixth embodiment, wherein a plurality of wedge pawls 1 are inwardly lanced up. And in relation thereto a hook 10e for holding said wedge pawls 1 e is formed by bending in the following manner.

The outer base lip 52e of the attaching base 5e is continuously extended longitudinally of the duct D from the proximal end of the front mast piece 41 c forming the bag-like connection mast 4e of the same single construction as in the first embodiment and inwardly continuously turned back to meander reversely from the extended front end, so that the interior defined by the two turned-back layers provides a cushion space S2; thus, the outer base lip 52e having such cushion space S2 is elastically externally contacted with the drum surface 2e of the duct D.

And as soon as the inwardly turned-back front end of the outer base lip 52e reaches the proximal end of the connection mast 4e, it is turned back and extended to meander in the opposite direction, thereby forming the inner base lip 51 elastically internally contacted with the drum surface 2e of the duct D.

In that case, the outer base lip 52e is bent up from an intermediate region of the extended portion by a given height H2 in outwardly directed step form to form a corner connection angle bar receiving U-shaped groove 12e recessed by a given depth at a corner where attaching base 5e and the connection mast 4e cross each other, said U-shaped groove 12e opened by the given width W cooperates with the top hook 6e of the connection mast 4e to hold the wing plate 13 of the corner angle bar A.

Furthermore, the attaching base 5e, unlike that shown in the first embodiment shown in Figs. 9 through 11, has its inner base lip 51 extended over a relatively long distance to underlie the U-shaped groove 12e for receiving the corner angle bar A, said bottom being thus raised.

Further, the turned-back extended front end of the inner base lip 51 e is turned back by a given length L4 rearwardly, which is opposite to the above-mentioned meandering direction, thereby defining the sealed bag-like cushion space S1 between adjacent layers, and the cushion space S1 associated with the inner base lip 51 e is filled with a sealant 11 e for sealing the duct D.

In addition, the rest of the arrangement of the sixth embodiment is substantially the same as the first embodiment; therefore, the corresponding numerals used in Figs. 9 through 11 with the letter "e" suffixed thereto are entered in Figs. 28 and 29 to omit a detailed description thereof.

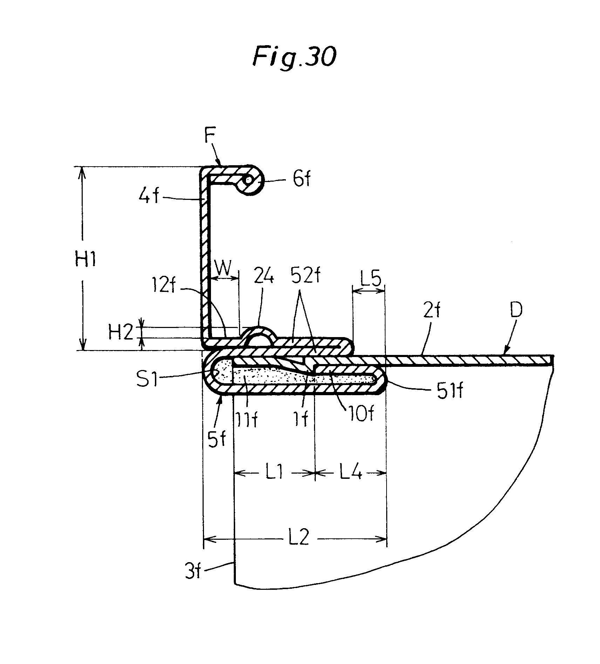

Fig. 30 shows a seventh embodiment of the invention, wherein the outer base lip 52f of the attaching base 5f extending from proximal end of the connection mast 4f is formed with a partition rib 24 by outward lancing-up by a given height H2, which partition rib extends from the intermediate region of said outer base lip 52f, thereby defining a U-shaped groove 12f correspondingly recessed by a given depth at a corner where the outer base lip 52f and the connection mast 4f cross each other for receiving the corner connection angle bar A.

Further, the inner base lip 51f of the attaching base 5f extends to underlie the U-shaped groove.

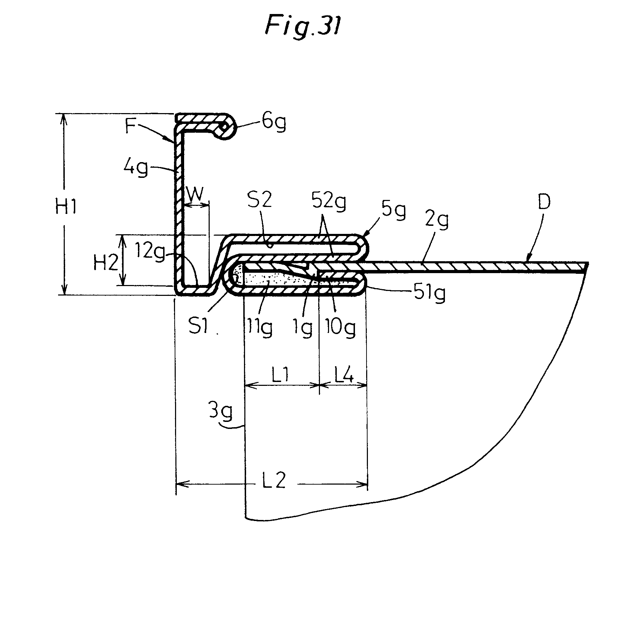

Fig. 31 shows an eighth embodiment of the invention, wherein the outer base lip 52g of the attaching base 5g is outwardly bent up by a given height H2, thereby defining a U-shaped groove 12g correspondingly recessed by a given depth at a corner where the outer base lip 52g and the connection mast 4g cross each other for receiving the corner connection angle bar A, said inner base lip 51 g of the attaching base 4g being limited in extension to such a degree that it terminates short of the bottom of the U-shaped groove 12g.

The rest of the arrangement of each of the seventh and eighth embodiments is the same as in the first embodiment; therefore, the corresponding numerals used in Figs. 9 through 11 with the letters "f" and "g" suffixed thereto are entered in Figs. 30 and 31, respectively, to omit a detailed description thereof.

In addition, in the first through eighth embodiments, the quadrangular duct D and its flange F have been described; however, it goes without saying that the invention can be applied to a round duct by winding the flange F in round form as seen in front view.

In brief, according to the arrangement described in Claim 1, a plurality of wedge pawls 1, 1 a, 1 are outwardly lanced up from the drum surface 2, 2a, 2b of the duct D in the vicinity of the open end of the duct D relation in the vicinity of the open end of a duct D, while the extended front end of the outer base lip 52, 52a, 52b of the flange F separate therefrom forming the attaching base 5, 5a, 5b is inwardly turned back to form the hook 10, 10a, 10b for holding said wedge pawls 1, 1 a, 1 b.

According to the arrangement described in Claim 6, a plurality of wedge pawls 1c, 1d, 1e, 1f, 1 are lanced up inwardly, which is opposite to the stated direction, from the drum surface 2c, 2d, 2e, 2f, 2g of the duct D in the vicinity of the open end of the duct D relation in the vicinity of the open end of a duct D, while the hook 10c, 10d, 10e, 10f, 10g for holding said wedge pawls 1 through 1 is outwardly turned back from the extended front end of the inner base lip 51c, 51d, 51e, 51f, 51g forming the attaching base 5c, 5d, 5e, 5f, 5g of the flange F.

Therefore, in either of the arrangements, the simple operation of inserting the attaching base 5, 5a - 5g of the flange F in the cut open end of the duct D from the insertion port O defined by the inner base lip 51, 51 a - 51g and the outer base lip 52, 52a - 52g results in inseparable engagement between the wedge pawls 1, 1 a - 1 g of the duct D and the holding pawl 10, 10a - 10g of the flange F; thus, the flange F can be quickly, stably and firmly attached for integration to the duct D.

No other operations, such as spot welding or rivet caulking, than the inserting operation are required for fixing the duct D and the flange F together, thus eliminating troubles and greatly increasing the operating efficiency and facilitating mass production.

Furthermore, the holding hook 10, 10a - 10g for the wedge pawls 1, 1 a - 1 g is closed as it is elastically urged against the inner base lip 51, 51 a, 51 b of the attaching base 5, 5a, 5b or the outer base lip 52c - 52g of the attaching base 5c - 5g, whereby the cushion spaces S1 and S2 are internally defined, and since the sealant 11, 11 a - 11 for the duct D is filled in the cushion spaces S1 and S2, there is no danger of the air leaking through the insertion port O; thus, the duct D can be maintained perfectly air-tight.

Particularly, according to the arrangement described in Claim 2 or 7, in continuously bending up the attaching base 5, 5a - 5g of the flange F from a single metal plate, it is turned back from the inner base lip 51, 51 a, 51 b to the outer base lip 52, 52a, 52b or from the outer base lip 52c - 52g to the inner base lip 51c - 51 g such that it meanders, whereby it is laminated in the corrugated state having a total of at least three layers with the cushion spaces S1 and S2 defined between adjacent layers of the two base lips 51, 51 a - 51 g, 52, 52a - 52g. Therefore, insertion of the attaching base 5, 5a - 5g in the open end of the duct D results in the duct D being elastically clamped from the opposite sides by the two base lips 51, 51 a - 51g, 52, 52a - 52g which define said cushion spaces S1 and S2. As a result, the attached state of the duct D and flange F which state is superior in durability and stability is obtained, and there is no possibility of the flange F being deformed. The tendency to increase the size of the duct D can be effectively coped with.

Further, according to the arrangement described in Claim 3 or 8, in the case where the connection mast 4, 4e, 4f, 4g of the flange F is formed in single construction, the eaves-like top hook 6, 6e, 6f, 6g cooperates with the U-shaped groove 12, 12e, 12f, 12g recessed in the attaching base 5, 5e, 5f, 5g to stably receive the wing plate 13 of the corner connection angle bar A for the flange F; thus, there is the effect that the flanges F can be smoothly connected together by the angle bars A.

According to the arrangement described in Claim 4 or 9, the connection mast 4a, 4c of the flange F is formed in double construction by being turned back in substantially inverted U-shape from the front piece 41, 41 c and the rear mast piece 42, 42c of the flange F; therefore, besides the effects described above, there is the effect that the wing plate 13 of the corner connection angle bar A can be stably inserted in the bag of the connection mast 4a, 4c.

According to the arrangement Claimed in 5 or 10, in the case where the connection mast 4b, 4d of the flange F is formed in double construction from the front mast piece 41 b, 41 d and the rear mast pieces 42b, 42d, the inner base lip 51 b, 51 d and the outer base lip 52b, 52d of the attaching base 5b, 5d are continuously turned back in the mutually entangled meandering state from the two mast pieces 41 b, 42b, 41 d, 42d; thus, the attaching base 5b, 5d can be laminated in the corrugated state haing a total of four layers, with the result that the strength with which the flange F is fixed to the duct D is further increased.

Further, according to the arrangement described in Claim 11, the respective front ends of the inner base lip 51 a, 51 b, 51 d, 51 e, 51f and outer base lip 52a, 52b, 52d, 52e, 52f forming the insertion port O of the attaching base 5a, 5b, 5d, 5e, 5f are turned back in smooth arcuate form with a given amount of stagger L5; therefore, there is the effect that attaching base can be more smoothly inserted in the open end of the duct D.

## Claims

1. A flange connection for ducts characterized in that a plurality of spaced wedge pawls (1, 1 a, 1 b) are formed in a row by outward lancing-up from the drum surface (2, 2a, 2b) of a duct (D) in the vicinity of the open end of the duct (D),
a separate independent flange (F) serving as a joint for said duct (D) is bent into a basic L-shaped cross-section from a single metal plate, one side of the L serving as a connection mast (4, 4a, 4b) extending by a given height (H1) radially of the duct (D), the other side serving as a lip-like attaching base (5, 5a, 5b) extending by a given length (L2) from the proximal end of the connection mast (4, 4a, 4b) longitudinally of the duct (D),
said lip-like attaching base (5, 5a, 5b) forming an inner base lip (51, 51a, 51b) facing the drum surface (2, 2a, 2b) of the duct (D) from the inside and an outer base lip (52, 52a, 52b) facing the drum surface (2, 2a, 2b) from the outside, said inner and outer base lips extending substantially in parallel, the extended front end of the inner base lip (51, 51 a, 51 b) being outwardly turned back to internally define a cushion space (S1),
the extended front end of said outer base lip (52, 52a, 52b) being inwardly turned back to internally define a cushion space (S2), thereby forming a holding hook (10, 10a, 10b) for said wedge pawls (1, 1 a, 1 b),
said holding hook (10, 10a, 10b) being closed as it is elastically urged against the inner base lip (51, 51a, 51b), such closing resulting in the cushion space (S2) associated with said outer base lip (52, 52a, 52b) being converted to a bag form, said cushion space being filled with a sealant (11, 11 a, 11 b) for making the duct (D) air-tight,
the arrangement being such that with an insertion port (O) defined between the inner base lip (51, 51 a, 51 b) and the outer base lip (52, 52a, 52b) of the attaching base (5, 5a, 5b), when the attaching base (5, 5a, 5b) is inserted in the open end of the duct (D) against the elastic urging force, the wedge pawls (1, 1 a, 1b) of the duct (D) and the holding hook (10, 10a, 10b) inseparably engage each other, said insertion port (O) being maintained air-tight by the sealant (11, 11 a, 11 b).

2. A flange connection for ducts as set forth in Claim 1, characterized in that the inner base lip (51, 51 a, 51 b) and the outer base lip (52, 52a, 52b) are successively turned back and extended such that the lip-like attaching base (5, 5a, 5b) extending by a given length (L2) from the proximal end of the connection mast (4, 4a, 4b) are reversed from the extended front end and continuously meanders, whereby it is laminated in the corrugated state having a total of at least three layers with two cushion spaces (S1, S2) each defined between adjacent layers of the two base lips (51, 51a, 51b, 52, 52a, 52b),
the extended front end of said outer base lip (52, 52a, 52b) being inwardly turned back by a given length (L4) to serve as a holding hook (10, 10a, 10b) for the wedge pawls (1, 1 a, 1 b), said hook beingclosed as it is elastically urged against the inner base lip (51, 51 a, 51 b).

3. A flange connection for ducts as set forth in Claim 1, characterized in that the inner base lip (51) and outer base lip (52) are successively turned back and extended such that the lip-like attaching base (5) extending by a given length (L2) from the proximal end of the connection mast (4) is reversed to continuously meander from its extended front end, whereby the attaching base is laminated in the corrugated state having at least three layers with two cushion spaces (S1, S2) each defined between adjacent layers of the two base lips,
a corner connection angle bar receiving U-shaped groove (12) of given opening width (w) is defined between the horizontally opposed respective portions of the turned-back portion extending from the inner base lip (51) to the outer base lip (52) and the connection mast (4),
the extended front end of said connection mast (4) being continuously bent to extend by a given length (L3) in the direction of presence of the attaching base (5) to form an eaves-like top hook (6), the vertically opposed respective portions of said top hook (6) and said U-shaped groove (12) being adapted to uninvertably hold the corner connection angle bar (A).

4. A flange connection for ducts as set forth in Claim 1, characterized in that the connection mast piece (4a) is turned back to have a substantially inverted U-shaped cross section comprising a front mast piece (41) and a rear mast piece (42), so as to receive the corner connection angle bar (A) of the duct (D) in a bag defined therein,
the inner base lip (51 a) and outer base lip (52a) of the lip-like attaching base (5a) are successively continuously turned back to meander from the proximal end of the front mast piece (41), said attaching base being thus laminated in the corrugated state having a total of at least three layers with cushion spaced (S1, S2) each defined between adjacent layers of the two base lips,
the inwardly turned-back front end of said outer base lip (52a) serving as a holding hook (10a) for the wedge pawls which holding hook is closed as it is elastically urged against the inner base lip (51 a).

5. A flange connection for ducts as set forth in Claim 1, characterized in that the connection mast piece 4b is turned back to have a substantially inverted U-shaped cross section comprising a front mast piece (41 b) and a rear mast piece (42b), so as to receive the corner connection angle bar (A) for the duct (D) in a bag defined therein,
the inner base lip (51b) of the lip-like attaching base (5b) is outwardly turned back from the proximal end of the front mast piece (41 b) and then the outwardly turned-back front end is turned back to meander in the opposite direction to form a first outer base lip (52b-1) facing the drum surface (2b) from the outside,
a second outer base lip (52b-2) externally surrounding the turned-back front end of said first outer base lip (52b-1) is inwardly turned back from the proximal end of said rear mast piece (42b), the inwardly turned-back front end serving as a holding hook (10b) for the wedge pawls (1 b) which holding hook is closed as it is elastically urged against the inner base lip (51 b).

6. A flange connection for ducts characterized in that a plurality of spaced wedge pawls (1 c, 1 d, 1 e, 1f, 1g) are formed in a row by inward lancing-up from the drum surface (2c, 2d, 2e, 2f, 2g) of a duct (D) in the vicinity of the open end of the duct (D),
a separate independent flange (F) serving as a joint for said duct (D) is bent into a basic L-shaped cross-section from a single metal plate, one side of the L serving as a connection mast (4c, 4d, 4e, 4f, 4g) extending by a given height (H1) radially of the duct (D), the other side serving as a lip-like attaching base (5c, 5d, 5e, 5f, 5g) extending by a given length (L2) from the proximal end of the connection mast (4c - 4g) longitudinally of the duct (D),
said lip-like attaching base (5c - 5g) forming an inner base lip (51c, 51d, 51 e, 51f, 51 g) facing the drum surface (2c - 2g) of the duct (D) from the inside and an outer base lip (52c, 52d, 52e, 52f, 52g) facing the drum surface (2c - 2g) from the outside, said inner and outer base lips extending substantially in parallel, the extended front end of the outer base lip (52c - 52g) being inwardly turned back to internally define a cushion space (S2),
the extended front end of said inner base lip (51c - 51g) being outwardly turned back to internally define a cushion space (S1), thereby forming a holding hook (10c, 10d, 10e, 10f, 10g) for the wedge pawls (1 c - 1 g),
said holding hook (10c - 10g) being closed as it is elastically urged against the outer base lip (52c - 52g), such closing resulting in the cushion space (S1) associated with the inner base lip (51 c - 51 g) being converted to a bag form, said cushion space being filled with a sealant (11c, 11 d, 11 e, 11f, 11g) for making the duct (D) air-tight,
the arrangement being such that with an insertion port (O) defined between the inner base lip (51 c - 51 g) and the outer base lip (52c - 52g) of the attaching base (5c - 5g), when the attaching base (5c - 5g) is inserted in the open end of the duct (D) against the elastic urging force, the wedge pawls (1 c - 1 g) of the duct (D) and the holding pawl (10c - 10g) inseparably engage each other, said insertion port (O) being maintained air-tight by the sealant (11c - 11g).

7. A flange connection for ducts as set forth in Claim 6, characterized in that the outer base lip (52c - 52g) and the inner base lip (51c - 51g) are successively turned back and extended such that the lip-like attaching base (5c - 5g) extending by a given length (L2) from the proximal end of the connection mast (4c - 4g) are reversed from the extended front end and continuously meander, whereby lamination is effected in the corrugated state having a total of at least three layers with two cushion spaces (S1, S2) each defined between adjacent layers of the two base lips (51 c - 51 g, 52c - 52g),
the extended front end of said inner base lip (51 c - 51 g) being inwardly turned back by a given length (L4) to serve as a holding hook (10c - 10g) for the wedge pawls (1 c - 1 g), said hook being closed as it is elastically urged against the inner base lip (51 c - 51 g).

8. A flange connection for ducts as set forth in Claim 6, characterized in that the outer base lip (52e, 52f, 52g) and inner base lip (51e, 51f, 51g) are successively turned back and extended such that the lip-like attaching base (5e, 5f, 5g) extending by a given length (L2) from the proximal end of the connection mast (4e, 4f, 4g) is reversed to continuously meander from its extended front end, whereby the attaching base is laminated in the corrugated state having at least three layers with two cushion spaces (S1, S2) each defined between adjacent layers of the two base lips (51 e - 51 g, 52e - 52g),
the intermediate portion of the outer base lip (52e - 52g) is bent in outwardly directed stagger form so that a corner connection angle bar receiving U-shaped groove (12e, 12f, 12g) of given opening width (w) is defined in the recessed state at a corner where the connection mast (4e - 4g) and the outer base lip (52e - 52g) cross each other,
the extended front end of said connection mast (4e - 4g) being continuously to extend bent by a given length (L3) in the direction of presence of the attaching base (5e - 5g) to form an eaves-like top hook (6e - 6g),
the vertically opposed respective portions of said top hook (6e - 6g) and said U-shaped groove (12e - 12g) being adapted to uninvertably hold the corner connection angle bar (A).

9. A flange connection for ducts as set forth in Claim 6, characterized in that the connection mast piece (4c) is turned back to have a substantially inverted U-shaped cross section comprising a front mast piece (41 c) and a rear mast piece (42c), so as to receive the corner connection angle bar (A) of the duct (D) in a bag defined therein,
the outer base lip (52c) and inner base lip (51c) of the lip-like attaching base (5c) are successively continuously turned back to continuously meander from the proximal end of the front mast piece (41 c), said attaching base being thus laminated in the corrugated state having a total of at least three layers with cushion spaces (S1, S2) each defined between adjacent layers of the two base lips (51 c, 52c),
the outwardly turned-back front end of said inner base lip (51 c) is closed as it is elastically urged against the outer base lip (52c) to serve as a holding hook (10c) for the wedge pawls.

10. A flange connection for ducts as set forth in Claim 6, characterized in that the connection mast piece 4d is turned back to have a substantially inverted U-shaped cross section comprising a front mast piece (41 d) and a rear mast piece (42d), so as to receive the corner connection angle bar (A) for the duct (D) in a bag defined therein,
the outer base lip (52d) of the lip-like attaching base (5d) is inwardly turned back from the proximal end of the rear mast piece (42d) and then the inwardly turned-back front end is turned back to meander in the opposite direction to form a first inner base lip (51d-1) facing the drum surface (2d) from the inside,
a second inner base lip (51 d-2) externally surrounding the turned-back front end of said first inner base lip (51d-1) is outwardly turned back from the proximal end of said front mast piece (41 d), the outwardly turned-back front end serving as a holding hook (10d) for the wedge pawls (1 d) which holding hook is closed as it is elastically urged against the outer base lip (52d).

11. A flange connection for ducts as set forth in Claim 6, characterized in that a given amount of stagger (L5) is provided between the extended front end of the inner base lip (51a, 51b, 51 d 51 e, 51f) forming the insertion port (O) of the attaching base (5a, 5b, 5d, 5e, 5f) and the extended front end of the outer base lip (52a, 52b, 52d, 52e, 52f).
